# EUROPÄISCHE PATENTSCHRIFT

(11) **EP 1 400 164 B1**
(45) Veröffentlichungstag und Bekanntmachung des Hinweises auf die Patenterteilung: **08.10.2008**
(21) Anmeldenummer: 03016955.1
(22) Anmeldetag: 25.07.2003
(51) Int. Cl.: A01F 15/18, F16G 3/10

(54) **Endloses Rundballenpressband und Verfahren zum Herstellen**
Endless belt for rotobaler and method for producing the same
Courroie sans fin pour une presse à balles rondes et procédé de fabrication

(30) Priorität: 20.09.2002 DE 10243727
(43) Veröffentlichungstag der Anmeldung: 24.03.2004
(73) Patentinhaber: ContiTech Transportbandsysteme GmbH, 30165 Hannover (DE)
(72) Erfinder: Wollersen, Helmut, 37154 Northeim (DE)
(74) Vertreter: Finger, Karsten

(56) Entgegenhaltungen:
- DE-A- 3 107 744
- US-A- 4 056 016
- US-A- 4 215 516
- US-A- 5 326 411
- US-A- 5 405 477

## Beschreibung

Die Erfindung betrifft ein endloses Rundballenpressband, entsprechend dem ersten Patentanspruch und ein Verfahren zur Herstellung eines endlosen Rundballenpressbandes nach Anspruch 4.
Ballenpressbänder finden Anwendung in Ballenpressen für Stroh, Heu oder andere landwirtschaftliche Erzeugnisse. Die üblichen fahrbaren Ballenpressen weisen eine Rollkammer auf, die von segmentartig angeordneten Mehrfachriementrieben umgeben sind. In der Rollenkammer wird lose zufließendes Erntegut zum Umlauf gebracht, und mit fortdauernder Materialzuführung in Form eines schichtweise gewickelten Rollenballens von innen nach außen zunehmend verdichtet. Die richtige Funktion der Ballenpresse mit dem Ziel eines im Kern weniger, in den Außenschichten dagegen stark und in seiner äußeren Umfangshaut sehr hoch verdichteten, sauber, zylindrisch ausgeformten Rollenballens, hängt im wesentlichen Maße von der Beschaffenheit der elastischen Presselemente ab. In der Regel werden dafür Endlosbänder aus elastomerem Werkstoff, wie Gummi, mit eingebettetem Verstärkungsgewebe aus Polyester oder Polyamidfäden gewählt.
Nach dem Stand der Technik sind verschiedene Pressbänder für Ballenpressen bekannt.

In DE 30 16 674 A1 ist ein Pressband für Ballenpressen beschrieben, welches aus Gummi oder gummiähnlichen Kunststoff mit eingebettetem Verstärkungsgewebe hergestellt ist, und bei dem mindestens die in Bandlängsrichtung verlaufenden Kettfäden des Verstärkungsgewebes aus miteinander verzwirnten Polyester- oder Baumwollfasern zusammengesetzt sind. Dem Dokument ist kein Hinweis darauf zu entnehmen, wie dieses Pressband hergestellt wird.

In EP 0 213 219 B1 ist ein Pressband für Rundballenpressen beschrieben, das durch besondere Ausbildung des Gewebes und der Verstärkungseinlagen besonders gute Eigenschaften im Hinblick auf die Festigkeit bzw. die Temperaturbeständigkeit aufweist. Dem Dokument ist nicht zu entnehmen, wie dieses Pressband gefertigt wird.

Endlose Pressbänder entstehen, indem ihre Enden durch Zusammennähen, Hakenverbinder, Klammern oder andere Mechaniken miteinander verbunden werden. Ein Beispiel dafür ist in US-4 056 016-A offenbart. Wichtig ist, dass die Bänderenden so miteinander verbunden sind, dass die Verbindungsstelle möglichst keine Lücke oder Unebenheit aufweist, das heißt, die Stoßfuge ist weitestgehend zu reduzieren. Bei längerer Lebensdauer ist häufig nicht vermeidbar, dass sich eine Stoßfuge ausbildet. Das Endlosmachen ohne Stoßfugen bei gummiertem Gewebe ist bei einem mehrschichtigen Pressband schwierig und aufwendig, da die Bandenden der verschiedenen Lagen miteinander verbunden werden müssen. Bei diesen Verbindungen weist das Pressband an der Verbindungsstelle geänderte elastische Eigenschaften auf und es kann zu einem Aufbrechen der Gewebeenden kommen, was einen vorzeitigen Verschleiß des Pressbandes zur Folge hat.

Der Erfindung liegt die Aufgabe zugrunde, ein Rundballenpressband zu schaffen, welches bei gleichbleibenden Eigenschaften über seinen Umfang günstig herstellbar ist, eine hohe Elastizität aufweist, ohne dass es bei längerem Gebrauch zu einem Ausbrechen von Teilen an den Verbindungsstellen kommt.

Diese Aufgabe wird durch einen Rundballenpressband nach den Merkmalen des ersten Patentanspruches gelöst und ein Verfahren zum Herstellen des Ballenpressbandes nach Anspruch 4. Unteransprüche geben vorteilhafte Ausgestaltungen der Erfindung wieder.

Die erfindungsgemäße Lösung sieht ein gattungsgemäßes Rundballenpressband vor, dessen Verstärkungsgewebe aus einer Gewebebahn zu einem Gewebewickel gewickelt ist, bei dem die Bahnenden schräg zur Bahnlängsrichtung geschnitten und ohne gegenseitige Überlappung mit dem Gewebewickel und einem Abdeckgewebe haftschlüssig verbunden sind. Die Enden der Gewebewickel sind in einem Winkel zwischen 32° und 45°, vorzugsweise in einem Winkel von 38°, zur Kettfadenrichtung geschnitten, wobei die Kettfäden in Bahnlängsrichtung verlaufen. Das Abdeckgewebe, welches zum Einen auf den Bahnenden und zum Anderen auf dem Gewebewickel angebracht ist und einen Streifen darstellt, sollte günstiger Weise aus gitterförmigen Polyamidgewebe bestehen. Durch das schräge Abschneiden der Gewebebahn unter einem Winkel von 38° zur Bandlaufrichtung und die eingebauten Fäden des Gittergewebes, bleiben die Übergangstellen zwischen den Gewebeenden und dem Band elastisch, so dass Fadenbrüche verhindert werden. Die offene Gitterstruktur des Abdeckgewebes ermöglicht ein Durchbinden der Haftschicht des Bandmaterials.

Das Rundballenpressband wird nicht in der Weise hergestellt, dass die Enden eines endlichen Bandes miteinander verbunden werden, sondern indem eine gummierte Gewebelage geringer Dicke über die Umfangslänge des vorgesehenen Rundballenpressbandes so lange gewickelt wird, bis die vorgesehene Lagenanzahl der Gewebeverstärkung des Ballenpressbandes erreicht ist, so dass sofort ein endloses Gewebeband entsteht. Dabei können zwei oder mehrere Gewebelagen entstehen. Die beiden Enden der gewickelten Gewebebahn werden schräg abgeschnitten. Auf die abgeschnittenen Enden werden Abdeckstreifen aufgelegt. Das Auflegen des inneren Abdeckstreifens kann per Hand geschehen. Die Abdeckstreifen sollten die gleiche Schräge wie die abgeschnittenen Bahnenden aufweisen.

Nach dem dann folgenden Auflegen der unteren und der oberen Gummideckplatte auf den endlosen Gewebewickel wird das so entstandene bzw. konfektionierte Endlosband vulkanisiert. Dabei verbinden sich die Gummideckplatten mit dem gewickelten Gewebekern. Dieses Vulkanisieren sollte in vorteilhafter Weise in einer Heizpresse erfolgen. Damit ist ein endlos gewickeltes Rundballenpressband entstanden, welches den Vorteil aufweist, dass es über seine gesamte Länge eine gleichbleibende Elastizität aufweist und Gewebebahnenden hat, die sich nicht Ablösen und zu einem vorzeitigen Verschleiß des Bandes führen.

Im Folgenden wird die Erfindung an zwei Figuren und einem Ausführungsbeispiel näher erläutert. Die Figuren zeigen:
- Figur 1:: Endlos gewickelter Gewebekern mit Abdeckgewebe in perspektivischer Seitenansicht
- Figur 2:: Endlos gewickelter Gewebekern mit Abdeckgewebe in Draufsicht

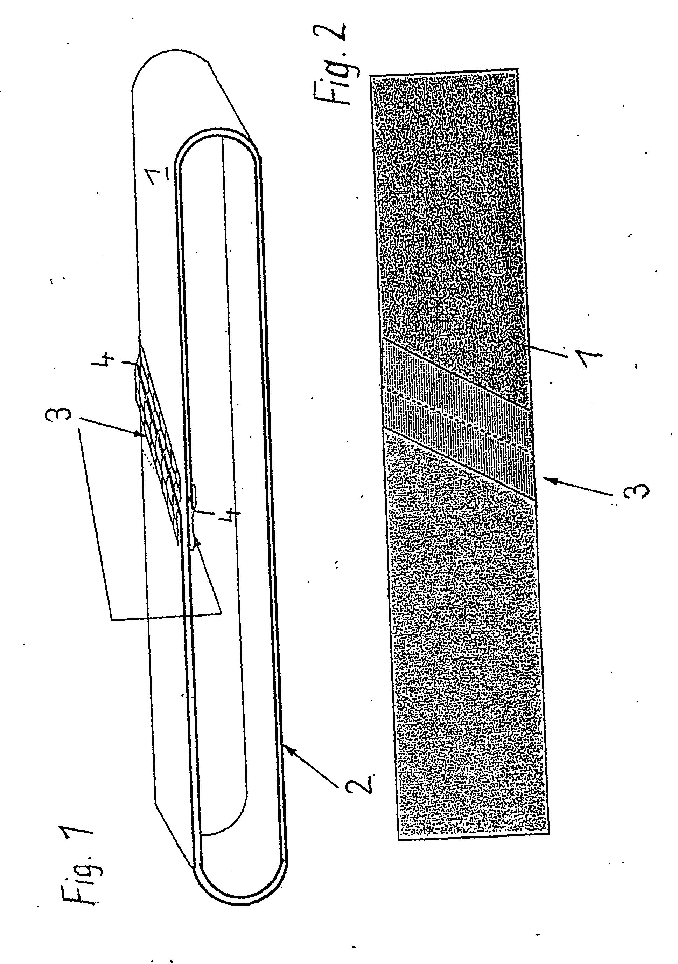

Die Figur zeigt einen endlos gewickelten Gewebekern 1, bestehend aus gummierter Gewebebahn 2, welche zwei Lagen bildet, wobei die Gewebebahnenden 4 schräg in einem Winkel von 38° zur Bahnlängsrichtung abgeschnitten sind, über die auf jeder Seite ein Abdeckgewebe 3 gelegt ist, welches im Weiteren mit den hier nicht gezeigten Gummideckplatten zu einem endlosen Ballenpressband durch Druck und Wärme zusammenvulkanisiert wird. Der Figur 2 ist zu entnehmen, dass das Abdeckgewebe 3 über dem Ende 4 der Gewebebahn im gleichen Winkel angebracht ist, in welchem die Bahn abgeschnitten wurde.

### Liste der verwendeten Bezugszeichen

- 1: Endlos gewickelter Gewebekern
- 2: Gummierte Gewebebahn
- 3: Abdeckgewebe
- 4: Enden der gewickelten Gewebebahn

## Patentansprüche

1. Endloses Rundballenpressband aus Gummi oder gummiähnlichen Stoffen mit einem endlos gewickelten, eingebetteten Verstärkungsgewebe, vorzugsweise zur Verwendung von Ballenpressen für Stroh, Heu oder anderen landwirtschaftlichen Erzeugnissen, dessen Verstärkungsgewebe aus einer Gewebebahn zu einem Gewebewickel gewickelt ist, bei dem die Gewebebahnenden (4) schräg zur Bahnlängsrichtung geschnitten und ohne Überlappung mit dem Gewebewickel und mit einem gitterförmigen Abdeckgewebe (3) haftschlüssig verbunden sind.

2. Rundballenpressband nach Anspruch 1, **dadurch gekennzeichnet, dass** die Enden der Gewebebahn in einem Winkel zwischen 32° und 45°, vorzugsweise von 38°, in Kettfadenrichtung geschnitten sind, wobei die Kettfäden in Bahnlängsrichtung verlaufen.

3. Rundballenpressband nach Anspruch 1 und/oder 2, **dadurch gekennzeichnet, dass** das Abdeckgewebe (3) ein Streifen aus gitterförmigem Polyamidgewebe ist.

4. Verfahren zum Herstellen eines endlos gewickelten Rundballenpressbandes nach den Ansprüchen 1 bis 3, **gekennzeichnet durch** folgende Verfahrensschritte:
- schräges Abschneiden eines Gewebebahnanfanges,
- endloses Wickeln der Gewebebahn bis zu seiner vorgegebenen Lagenanzahl,
- schräges Abschneiden der Bahn, wobei Anfang und Ende ohne Überlappung annähernd benachbart liegen,
- Anbringen von Abdeckstreifen aus Gittergewebe auf beiden Bahnenden
- Verpressen der Bahnenden,
- Aufbringen der inneren und der äusseren Gummideckplatte,
- Vulkanisieren des aufgebauten Bandrohlings.

5. Verfahren nach Anspruch 4, **dadurch gekennzeichnet, dass** das Vulkanisieren in einer Heizpresse erfolgt.

## Claims

1. Endless belt for a rotobaler made of rubber or rubber-like materials, with an endlessly wound, embedded reinforcing fabric, preferably for the use of balers for straw, hay or other agricultural products, the reinforcing fabric of which is wound from a fabric web to form a fabric pack, in which the ends (4) of the fabric web are cut at an angle to the longitudinal direction of the web and joined with adhesive bonding to the fabric pack and to a mesh-like covering fabric (3) without overlap.

2. Belt for a rotobaler according to Claim 1, **characterized in that** the ends of the fabric web are cut at an angle between 32° and 45°, preferably of 38°, in the direction of the warp threads, the warp threads running in the longitudinal direction of the web.

3. Belt for a rotobaler according to Claim 1 and/or 2, **characterized in that** the covering fabric (3) is a strip of mesh-like polyamide fabric.

4. Method for producing an endlessly wound belt for a rotobaler according to Claims 1 to 3, **characterized by** the following method steps:
- cutting off a beginning of the fabric web at an angle,
- endlessly winding the fabric web to its predetermined number of layers,
- cutting off the web at an angle, the beginning and end lying approximately adjacent without overlap,
- attaching cover strips of mesh fabric to both ends of the web
- pressing the ends of the web,
- applying the inner and outer rubber cover sheets,
- vulcanizing the built-up belt blank.

5. Method according to Claim 4, **characterized in that** the vulcanizing is performed in a heating press.

## Revendications

1. Courroie sans fin pour presse à balles rondes, en caoutchouc ou en matériau similaire au caoutchouc, dans laquelle est incorporé un tissu de renfort enroulé sans fin, de préférence destinée à être utilisée dans des presse à balles de paille, de foin ou d'autres produits agricoles et dont le tissu de renfort qui provient d'une nappe de tissu est enroulé en un rouleau de tissu, les extrémités (4) de la nappe de tissu étant découpées obliquement par rapport au sens de longueur de la nappe et étant reliées par adhérence et sans superposition au rouleau de tissu et à un tissu de recouvrement (3) en forme de grille.

2. Bande pour presse à balles rondes selon la revendication 1, **caractérisée en ce que** les extrémités de la nappe de tissu sont découpées à un angle compris entre 32° et 45° et de préférence de 38° par rapport à la direction des fils de chaîne, les fils de chaîne s'étendant dans le sens de la longueur de la nappe.

3. Bande pour presse à balles rondes selon les revendications 1 et/ou 2, **caractérisée en ce que** le tissu de recouvrement (3) est un ruban de tissu de polyamide en grille.

4. Procédé de fabrication d'une bande pour presse à balles rondes enroulée sans fin selon les revendications 1 à 3, **caractérisé par** les étapes suivantes :
- découpe oblique du début d'une nappe de tissu,
- enroulement sans fin de la nappe de tissu jusqu'à son nombre de couches prédéterminé,
- découpe oblique de la nappe, le début et la fin étant situés au voisinage l'un de l'autre sans recouvrement,
- placement de rubans de recouvrement en tissu en grille sur les deux extrémités de la nappe,
- compression des extrémités de la nappe,
- placement de la plaque intérieure et de la plaque extérieure de recouvrement en caoutchouc et
- vulcanisation de l'ébauche de bande ainsi formée.

5. Procédé selon la revendication 4, **caractérisé en ce que** la vulcanisation s'effectue dans une presse à chaud.
